# EUROPÄISCHE PATENTSCHRIFT

(11) **EP 3 215 321 B1**
(45) Veröffentlichungstag und Bekanntmachung des Hinweises auf die Patenterteilung: **14.02.2018**
(21) Anmeldenummer: 17702531.9
(22) Anmeldetag: 12.01.2017
(51) Int. Cl.: B25J 21/02, B01L 1/04

(54) **ISOLATOR, ISOLATORSYSTEM SOWIE VERFAHREN**
ISOLATOR, ISOLATOR SYSTEM AND METHOD
ISOLATEUR, SYSTÈME ISOLATEUR ET PROCÉDÉ

(30) Priorität: 25.01.2016 DE 102016101195
(43) Veröffentlichungstag der Anmeldung: 13.09.2017
(73) Patentinhaber: Metall + Plastic GmbH, 78315 Radolfzell (DE)
(72) Erfinder: KLEINMANN, Stefan, 78315 Radolfzell (DE)
(74) Vertreter: Patentanwälte Behrmann Wagner PartG mbB
(86) Internationale Anmeldenummer: PCT/EP2017/050523
(87) Internationale Veröffentlichungsnummer: WO 2017/129408

(56) Entgegenhaltungen:
- CA-A1- 2 325 830
- JP-A- 2000 343 479
- US-A- 3 475 808

## Beschreibung

Die Erfindung betrifft einen Isolator (Reinraumvorrichtung), insbesondere für pharmazeutische und/oder chemische Anwendungen, mit einem eine Doppelwand aufweisenden Isolatorraum, wobei die Doppelwand mindestens eine durchsichtige, vorzugsweise aus Glas oder einem transparenten Kunststoff ausgebildete äußere Wandscheibe und eine dazu beabstandete durchsichtige, vorzugsweise aus einem Glas oder einem transparenten Kunststoff ausgebildete, innere Wandscheibe umfassen, die einen Zwischenraum, insbesondere zur Gasführung, begrenzen und mit mindestens einem der Doppelwand zugeordneten Handschuhport, umfassend Mittel zum lösbaren Festlegen eines Handschuhs zum Durchgreifen der Doppelwand zum manuellen Eingreifen in den Isolatorraum, wobei der Handschuhport einen, einen Durchgriffskanal umgebenden, bevorzugt durchsichtigen, Kanalring aufweist, der sich ausgehend von der äußeren Wandscheibe in Richtung der inneren Wandscheibe erstreckt, wobei die äußere Wandscheibe und die innere Wandscheibe für einen erleichterten Handschuhwechsel relativ zueinander verstellbar, insbesondere verschwenkbar angeordnet sind, und wobei die Mittel zum lösbaren Festlegen des Handschuhs in einem Bereich zwischen der äußeren Wandscheibe und der inneren Wandscheibe außerhalb des Durchgriffskanals angeordnet sind. Dabei ist der Kanalring bevorzugt entweder einteilig mit der äußeren Wandscheibe ausgebildet und auf diese Weise fest mit dieser verbunden oder alternativ gasdicht an der äußeren Wandscheibe, insbesondere im Bereich bzw. innerhalb einer äußeren Wandscheibenöffnung festgelegt. Bevorzugt umfasst der Isolator eine, bevorzugt eine Verdampfungseinrichtung aufweisende, Dekontaminationseinrichtung zum Herstellen der Reinraumbedingungen mittels seines Dekontaminationsmittels, wie beispielsweise Wasserstoffperoxid. Ferner umfasst die Vorrichtung bevorzugt eine Frischluftkonditioniereinrichtung.

Zudem betrifft die Erfindung ein Isolatorsystem gemäß Anspruch 8, welches neben einem erfindungsgemäßen Isolator einen an dem Handschuhport lösbar festgelegten Handschuh umfasst.

Darüber hinaus betrifft die Erfindung ein Verfahren gemäß dem Oberbegriff des Anspruchs 10 zum lösbaren Festlegen eines Handschuhs an einem Handschuhport eines erfindungsgemäßen Isolators.

Isolatoren werden beispielsweise in der pharmazeutischen und chemischen Industrie eingesetzt, um in einem von dem Isolator begrenzten bzw. gebildeten Isolatorraum (Reinraum) kritische Prozesse, beispielsweise Sterilisations- und/oder Abfüll- und/oder Produktionsprozesse durchführen zu können. Je nach Anwendung mit den Isolatoren ist ein Produkt vor äußeren, atmosphärischen Einflüssen geschützt oder bei der Verarbeitung gefährlicher, insbesondere gesundheitsschädlicher Produkte die Bedienpersonen eines Isolators. Damit Bedienpersonen manuell von außen in den Isolatorraum eingreifen können, sind Isolatoren üblicherweise mit sogenannten Handschuhports (Handschuhanschlüssen) versehen, an denen lösbar, in der Regel Elastomerhandschuhe festlegbar sind, die eine Trennbarriere zwischen dem Isolatorraum und der Außenwelt bilden. Solche Isolatoren werden auch als Handschuhbox bzw. -kammer bezeichnet. Für einen guten Produktschutz bzw. Bedienpersonenschutz muss sichergestellt sein, dass der Handschuh sicher bzw. gasdicht am Handschuhport fixiert ist.

Zur lösbaren Fixierung von Handschuhen an Handschuhports von Isolatoren haben sich in der Praxis unterschiedliche Systeme durchgesetzt.

Von der Anmelderin wird bisher ein System präferiert, bei welchem der Handschuh an einem dicht innerhalb des Kanalrings angeordneten inneren Ring fixiert ist, der den freien Querschnitt des Kanalrings reduziert. Dieses System hat den Vorteil, dass ein Handschuhwechsel im Betrieb des Isolators möglich ist, da ein mit einem Innenring versehener neuer und beispielsweise über eine Schleuse während des Betriebs in den Isolator eingebrachter Handschuh von innen in den Kanalring mittels eines entsprechenden Werkzeugs eingeführt wird und auf diese Weise der alte Handschuh mit zugehörigem Innenring nach außen entnommen wird, wobei der neue Handschuh mit Innenring den Kanal im Kanalring verschließt. Das bekannte System erfordert einen zusätzlichen Fixierschritt zum Fixieren des Handschuhs an einem Innenring, wozu Verschraubungen des Innenrings gelöst und der Handschuh klemmend aufgenommen werden kann.

Alternative, bekannte Systeme sehen keine Auswechselbarkeit eines Handschuhs während des Betriebs vor. Der Anmelderin ist aus der Praxis ein System bekannt, bei welchem der Handschuh an einem ausgehend von der äußeren Wandscheibe nach außen ragenden und mit dem Kanalring fluchtenden Fixierstutzen festlegbar und dann nach innen durch den Kanalring durchstülbbar ist. Hier muss jedoch aufwendig sichergestellt werden, dass der Handschuh bei Kraftbeaufschlagung durch eine Bedienperson in der Einsteckrichtung während des Betriebs von dem äußeren Fixierstutzen nicht abrutschen kann. Darüber hinaus ist der Handschuh, wie erläutert, durch das Innere des Kanalrings geführt, so dass der freie Blick durch den bei der bekannten Ausführung durchsichtigen Kanalring durch den Handschuh selbst deutlich beschränkt wird. Ein weiteres Problem der bekannten Ausführung besteht darin, dass bei einer regelmäßig durchzuführenden Dichtheitsprüfung, bei welchem der Handschuh durch Aufblasen und Messen des Druckverlustes auf Dichtheit mithilfe einer sogenannten Prüfscheibe geprüft wird, die zu diesem Zweck in den Kanalring eingesetzt wird, gerade der sich auf der Isolatoraußenseite befindliche kritische Fixierbereich des Handschuhs nicht geprüft werden kann.

Aus der GB 1 273 926 A ist eine sog. Handschuhbox (glove box) bekannt, die ein komplexes Handschuhwechselsystem beinhaltet, um einen Handschuh während des Betriebs der Handschuhbox wechseln zu können. Der Handschuhwechsel ist äußerst aufwendig und die Konstruktion komplex.

Aus der DE 694 26 116 T2 ist eine doppelwandige Behandlungsvorrichtung bekannt, wobei die Doppelwand über zwei ineinander greifende Handschuhe durchgreifbar ist. Ein Äußerer der Handschuhe ist in einem Außenbereich der äußeren Wand festgelegt, während ein innerer Handschuh an einer Außenseite der inneren Wand fixiert ist.

Die DE 10 2004 030 766 A1 beschreibt ein Prüfsystem und ein Verfahren zur Messung der Dichtheit von Handschuhen, wobei zum Durchgreifen einer Doppelwand ein in einem Bereich außerhalb einer Außenwand fixierter Handschuh vorgesehen ist.

Die US 2012 / 0 023 721 A1 beschreibt ein komplexes System zur Fixierung von Handschuhen an einem Containment.

Die US 2004 / 0 168 341 A1 beschreibt ein System mit mehreren in einem Außenbereich fixierten Handschuhen.

Die US 2008 / 0 314 774 A1 beschreibt eine Handschuhbox, bei der eine Doppelwand von einer Handschuhbox bei der eine Doppelwand von einem Handschuh durchgriffen ist.

In der JP 200 343479 A ist ein Isolator mit einem eine Doppelwand aufweisenden Isolatorraum beschrieben. Der Isolator umfasst einen Handschuhport mit Mitteln zum lösbaren Festlegen eines Handschuhs zum Durchgreifen der Doppelwand und zum manuellen Eingreifen in den Manipulatorraum. Die Mittel umfassen einen Sicherungsring zum Umspannen des Handschuhs, wobei der Sicherungsring innerhalb eines Innenraums angeordnet ist, der außen von einer inneren Wandscheibe der Doppelwand begrenzt ist.

Die US 3,475,808 A beschreibt einen Isolator mit einem eine Einfachwand aufweisenden Isolatorraum, wobei der Einfachwand ein Handschuhport zugeordnet ist mit Mitteln zum lösbaren Festlegen eines Handschuhs zum Durchgreifen der Einfachwand zum manuellen Eingreifen in den Isolatorraum. Die Mittel zum lösbaren Festlegen des Handschuhs sind außerhalb der Einfachwand bzw. im Außenbereich des Isolators angeordnet.

Die CA 2 325 830 A1 zeigt einen Inkubator mit einer Innenscheibe und einer Außenscheibe. Zwischen den Scheiben ist eine Durchgriffsmanschette angeordnet.

Ausgehend von dem vorgenannten Stand der Technik liegt daher der Erfindung zugrunde einen verbesserten, als Handschuhbox ausgebildeten Isolator anzugeben, der sich zum einen durch eine komfortable und außerdem sichere (dichte) Fixiermöglichkeit des Handschuhs am Handschuhport auszeichnet und trotzdem sichergestellt ist, dass der Handschuh bei einer regelmäßigen Dichtheitsprüfung vollständig auf Dichtheit prüfbar ist. Bevorzugt soll trotz vorgenannter Vorgaben sichergestellt sein, dass der Durchgriffskanal einen großen, insbesondere nicht durch einen Innenring geschmälerten freien Querschnitt aufweist. Ferner besteht die Aufgabe darin, ein Isolatorsystem mit einem derartig verbesserten Isolator anzugeben sowie ein Verfahren für ein komfortables und sicheres Handschuhwechseln an einem solchen Isolator.

Diese Aufgabe wird hinsichtlich des Isolators mit den Merkmalen des Anspruchs 1 gelöst.

Hinsichtlich des Isolatorsystems wird die Aufgabe mit den Merkmalen des Anspruchs 8 gelöst.

Hinsichtlich des Verfahrens wird die Aufgabe mit den Merkmalen des Anspruchs 10 gelöst.

Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen. Zur Vermeidung von Wiederholungen sollen vorrichtungsgemäß offenbarte Merkmale auch als verfahrensgemäß offenbart und beanspruchbar sein. Ebenso sollen verfahrensgemäß offenbarte Merkmale auch als vorrichtungsgemäß offenbart gelten und beanspruchbar sein.

Der Erfindung liegt der Gedanke zugrunde, eine einfache und sichere Befestigung des Handschuhs am Handschuhport dadurch zu ermöglichen, dass die Mittel zum lösbaren Festlegen des Handschuhs in einem Bereich zwischen der äußeren Wandscheibe und der inneren Wandscheibe außerhalb des Durchgriffskanals angeordnet sind. Mit anderen Worten ist erfindungsgemäß vorgesehen, dass der Handschuh in einem Bereich außerhalb des Durchgriffskanals, insbesondere im Zwischenraum, jedenfalls zwischen der äußeren und der inneren Wandscheibe fixierbar ist, also in einem über die äußere Wandscheibe von der Umwelt/Atmosphäre abgeschotteten Bereich, welcher bevorzugt durchströmt ist im Umluftbetrieb und/oder während eines Freispülvorgangs von innerhalb des Isolatorraums befindlichem Gas, beispielsweise steriler Luft und/oder Dekontaminationsmittel, beispielsweise Wasserstoffperoxiddampf. Die Fixierung des Handschuhs in diesem Bereich bringt mindestens zwei Vorteile mit sich. Zum einen kann der Handschuh auf einfache Weise nach einem Zugänglichmachen, insbesondere nach einem Öffnen der äußeren Wandscheibe, fixiert werden, ohne dass es eines im Stand der Technik notwendigen, innerhalb des Kanalrings anordnenbaren Innenrings bedarf, beispielsweise durch einfaches Überstülpen des Handschuhs über den Kanalring in Richtung äußerer Wandscheibe. Darüber hinaus ist von Vorteil, dass bei der erfindungsgemäßen Befestigungsart mit herkömmlichen Prüfgeräten, insbesondere Prüfscheiben, die innerhalb des Kanalrings dichtend anordnenbar sind, um den Handschuh aufzublasen und einen etwaigen Druckverlust zu überwachen, der gesamte Handschuh, insbesondere auch in seinem Fixierbereich auf Dichtheit überprüfbar ist, da sich dieser nicht wie bei aus dem Stand der Technik bekannten Lösungen in einem Bereich außerhalb der äußeren Wandscheibe befindet. Ein weiterer Vorteil besteht darin, dass es bei der erfindungsgemäßen Befestigungsweise keines Innenrings bedarf, der die freie Querschnittsfläche des Durchgriffskanals, genauer des Kanalrings reduzieren würde, wodurch die Bewegungsfreiheit (größere freie Querschnittsfläche) für eine Bedienperson wesentlich verbessert wird. Insbesondere dann, was bevorzugt ist, wenn der Kanalring durchsichtig ausgebildet ist, beispielsweise aus Glas oder einem transparenten Kunststoff wie Polymethylmethacrylat besteht, kann die Bedienperson deutlich besser schräg durch den Kanalring in den Isolatorraum sehen, als dies bei Stand der Technik-Lösungen möglich wird, da die Blickführung nicht durch einen wie im Stand der Technik durch den Kanalring hindurchgeführten Handschuh verdeckt bzw. blockiert wird.

Um die Sicherheit gegen ein ungewolltes Ablösen des Handschuhs, insbesondere vom Kanalring oder einer sonstigen Mimik zu erhöhen, erfindungsgemäß der Erfindung mit Vorteil vorgesehen, dass die Mittel zum lösbaren Fixieren einen, bevorzugt als Elastomerring, beispielsweise O-Ring ausgebildeten, Sicherungsring zum Umspannen des Handschuhs und bevorzugt gleichzeitig des Kanalrings im Bereich zwischen der äußeren Wandscheibe und der inneren Wandscheibe umfassen, wobei dieser Sicherungsring bevorzugt nach Festlegen des Handschuhs, beispielsweise in einer vorerwähnten Ringnut oder nach Übergreifen eines vorerwähnten Ringwulstes von der Innenseite her über den Handschuh geschoben wird, insbesondere derart, dass der Handschuh zusätzlich verspannt wird, insbesondere unmittelbar gegen den Kanalring oder der vorerwähnten sonstigen Fixiereinrichtung (insbesondere Überstülpeinrichtung).

Um die Sicherheit weiter zu erhöhen, ist weiter erfindungsgemäß mit Vorteil vorgesehen, dass dem Sicherungsring Rückhaltemittel zugeordnet sind, dass der Sicherungsring also derart relativ zu der inneren Wandscheibe angeordnet ist, dass die, bevorzugt einen Halteanschlag für den Sicherungsring bildende, innere Wandscheibe ein Abrutschen des Sicherungsrings von dem Handschuh in Richtung Innenraum (Isolatorraum) verhindert. Anders ausgedrückt sind Sicherungsring und innere Wandscheibe im Betriebszustand bevorzugt derart relativ zueinander angeordnet bzw. anordenbar, dass der Sicherungsring vor einem Abrutschen durch Anschlagen an der inneren Wandscheibe gehindert wird. Besonders bevorzugt hierzu ist es, wenn der Kanalring oder eine sonstige Fixiereinrichtung (insbesondere Überstülpeinrichtung) zumindest näherungsweise bis an eine Durchgangsöffnung in der inneren Wandscheibe hineinreicht, ganz besonders bevorzugt bis in diese Durchgangsöffnung hinein oder noch weiter bevorzugt ein Stück weit in den Isolatorraum durch diese Durchgangsöffnung hindurch.

Unter dem verwendeten Gattungsbegriff "Isolator" wird bei einer bevorzugten weiten Betrachtung jede Reinraumkonstellation verstanden, insbesondere neben klassischen Isolatoren auch sogenannte RABS, die als sogenannter Handschuhkasten (glove box) ausgebildet sind, um von außen in eine Reinraumatmosphäre innerhalb des Reinraums (Isolatorraums) eingreifen zu können und die mit einer Doppelscheibenanordnung zur Begrenzung des Isolatorraums bzw. Reinraums ausgestattet sind, welcher ein Handschuhport zugeordnet ist, um die Doppelscheibenanordnung (Doppelwand) von außen manuell in den Isolatorraum hinein durchgreifen zu können. Bevorzugt handelt es sich um ein Isolator für pharmazeutische und/oder chemische Anwendungen mit einer Dekontaminationseinrichtung, insbesondere umfassend einen H₂O₂-Verdampfer.

Grundsätzlich ist es möglich, zusätzlich zu dem Kanalring, insbesondere im Bereich des Zwischenraums bzw. zwischen der äußeren Wandscheibe und der inneren Wandscheibe eine Überstülpmimik vorzusehen, über die der Handschuh, insbesondere in Richtung äußerer Wandscheibe zu dessen Fixierung überstülpbar ist. Besonders bevorzugt ist jedoch eine in Weiterbildung der Erfindung vorgesehene Maßnahme, wonach unmittelbar der Kanalring zur überstülpenden Aufnahme eines eingriffsseitigen (d.h. rückseitigen) Handschuhendes (Fixierendes) ausgebildet ist.

Insgesamt ist es von Vorteil, wenn die Mittel zum lösbaren Festlegen des Handschuhs am Außenumfang des Kanalrings angeordnet sind und noch weiter bevorzugt, zumindest teilweise vom Außenumfang des Kanalrings selbst gebildet sind. Bevorzugt sind die Mittel mit Abstand zu der äußeren Wandscheibe in Richtung der inneren Wandscheibe versetzt angeordnet, um somit die freie Blickfläche durch den Kanalring hindurch (bei bevorzugter, jedoch nicht zwingender durchsichtiger Ausführung) zu maximieren. Um nun den Handschuhwechsel besonders komfortabel zu gestalten ist im Rahmen der Erfindung mit Vorteil vorgesehen, dass die äußere Wandscheibe und die innere Wandscheibe relativ zueinander verstellbar, insbesondere verschwenkbar angeordnet sind, um den Handschuh nach Beabstanden der Wandscheiben zueinander an den Mitteln zum lösbaren Festlegen des Handschuhs, insbesondere unmittelbar am Kanalring festlegen zu können. Bevorzugt sind die äußere Wandscheibe und die innere Wandscheibe während eines Betriebszustandes des Isolators parallel zueinander angeordnet. Unabhängig davon, ob die äußere Wandscheibe und die innere Wandscheibe relativ zueinander verstellbar, insbesondere verschwenkbar sind ist es bevorzugt, wenn die innere Wandscheibe und die äußere Wandscheibe, bevorzugt gemeinsam, Bestandteile einer verstellbaren, insbesondere verschwenkbaren Tür sind, durch die in den Isolatorraum (bei geöffneter Tür) außerhalb des Betriebs eingegriffen werden kann.

Als besonders vorteilhaft hat es sich herausgestellt, wenn auf einer den Isolatorraum zugewandten Seite der äußeren Wandscheibe, insbesondere unmittelbar im Außenumfang des Kanalsrings oder alternativ in einer zusätzlich zu dem Kanalring vorgesehenen, beispielsweise am Kanalring festgelegten Fixiereinrichtung eine, insbesondere nach außen in Richtung Zwischenraum offene Ringnut zur, insbesondere verspannenden, Aufnahme eines, insbesondere eingriffsendseitigen, Handschuhwulstrings angeordnet ist. Zusätzlich oder alternativ zu dem Vorsehen einer Ringnut kann, beispielsweise unmittelbar am Außenumfang des Kanalrings oder einer zusätzlich vorgesehenen Einrichtung ein mittels des Handschuhwulstrings, insbesondere in Richtung äußerer Wandscheibe übergreifbarer Ringwulst vorgesehen sein, wobei Ringnut und Ringwulst eine gute Verspannbarkeit und einen sicheren Sitz des Handschuhs gewährleisten sollen. Zusätzlich oder alternativ zu einer Ringnut oder einem Ringwulst können die Mittel zum lösbaren Festlegen andere oder zusätzliche Fixiermöglichkeiten, beispielsweise eine Fixiereinrichtung, insbesondere im Bereich zwischen der inneren und der äußeren Wandscheibe, umfassen.

Um einen guten Sitz des Sicherungsrings, insbesondere am Außenumfang des Kanalrings oder der Haltemimik (jeweils ober- bzw. außerhalb des Handschuhs), zu gewährleisten ist in Weiterbildung der Erfindung mit Vorteil vorgesehen, dass dem Sicherungsring eine, insbesondere in Richtung des Zwischenraums offene, Haltenut zugeordnet ist, insbesondere im Außenumfang des Kanalrings oder einer fakultativen zusätzlichen Haltemimik, wobei bei fixiertem Handschuh die Haltenut von dem Handschuh durchlaufen bzw. übergriffen wird. Zusätzlich oder alternativ zu einer Haltenut (Ringnut) kann ein Haltewulst vorgesehen sein, der ein Abgleiten bzw. eine Bewegung des Sicherungsrings in Richtung innerer Wandscheibe verhindert. Für den bevorzugten Fall des Vorsehens einer Ringnut und/oder eines Ringwulstes für den Handschuhringwulst ist es bevorzugt, wenn sich die Haltenut und/oder der Haltewulst für den Sicherungsring in einem Bereich zwischen der Ringnut bzw. dem Ringwulst und der inneren Wandscheibe, insbesondere am Außenumfang des Kanalrings oder der zusätzlichen Fixiereinrichtung befindet.

Wie bereits angedeutet befindet sich in der inneren Wandscheibe, bevorzugt eine Öffnung (Durchgangsöffnung), die mit dem von dem Kanalring umgebenen Durchgriffskanal fluchtet, um mittels des Handschuhs hindurchgreifen zu können. Bevorzugt erstreckt sich der Kanalring zumindest näherungsweise von der äußeren Wandscheibe bis zu dieser Öffnung, noch weiter bevorzugt bis in die Öffnung hinein oder ganz besonders bevorzugt über die Öffnung hinaus in den Isolatorraum hinein. Dabei ist es bevorzugt, wenn ein ggf. verbleibender Ringspalt zwischen dem beispielsweise kreisringförmig oder oval konturierten, in einer Eingriffsrichtung langgestreckten Kanalring so bemessen ist, dass ein vorerwähnter, fakultativer Sicherungsring im Randbereich der Öffnung in der inneren Wandscheibe anschlagen bzw. von einem solchen Randbereich zurückgehalten werden kann.

Im Rahmen des erfindungsgemäßen Verfahrens ist vorgesehen, dass der, insbesondere aus einem Elastomermaterial bestehende und/oder fünf Finger und/oder einen endseitigen Handschuhringwulst aufweisende Handschuh, insbesondere mit einem eingriffsseitigen, bevorzugt den vorerwähnten Handschuhringwulst aufweisenden Ende, außerhalb des Durchgriffskanals in einem Bereich zwischen der äußeren und der inneren Wandscheibe, insbesondere im Zwischenbereich, am Handschuhport, bevorzugt unmittelbar am Außenumfang des Kanalrings festgelegt wird. Besonders zweckmäßig ist es, wenn hierzu die äußere und die innere Wandscheibe voneinander wegbewegt, insbesondere wegverschwenkt werden, um den Handschuh in Richtung Innenseite der äußeren Wandscheibe, beispielsweise direkt auf den dann ein freies Ende aufweisenden Kanalring oder eine zusätzlich vorgesehene Mimik aufstülpen zu können, insbesondere mit dem Handschuhringwulst in eine Ringnut hinein oder über einen Ringwulst. Erfindungsgemäß ist vorgesehen, dass der Handschuh zusätzlich gesichert wird durch einen Sicherungsring, der um den Handschuh gelegt, insbesondere gespannt wird, insbesondere in eine entsprechende Haltenut hinein oder hinter einen entsprechenden Haltewulst, bevorzugt ebenfalls aus Richtung eines freien Endes des Kanalrings, wobei nach erfolgter Fixierung und bevorzugtem Durchführen des Handschuhs durch eine Durchgangsöffnung der inneren Wandscheibe eine ursprüngliche, insbesondere parallelisierte Relativposition der Wandscheiben zueinander eingestellt wird. In dieser Relativposition sichert die innere Wandscheibe den Sicherungsring gegen Abrutschen.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1:: einen Ausschnitt eines als Handschuhkasten ausgebildeten Isolators mit einer Doppelwand, umfassend eine als Doppelglasscheibe ausgebildete äußere Wandscheibe und eine hierzu parallele in Richtung Isolatorraum versetzte einfache innere Wandscheibe in einer schrägperspektivischen Ansicht, wobei der Doppelwand ein Handschuhport mit einem nur ausschnittsweise dargestellten Handschuh zugeordnet ist,
- Fig. 2:: eine Draufsicht auf die Handschuhportanordnung von Innen aus Richtung Isolatorraum,
- Fig. 3:: eine Schnittdarstellung entlang der Schnittlinie A - A gemäß Fig. 2, und
- Fig. 4:: ein vergrößertes Detail Z aus Fig. 3.

In den Figuren sind gleiche Elemente und Elemente mit der gleichen Funktion mit den gleichen Bezugszeichen gekennzeichnet.

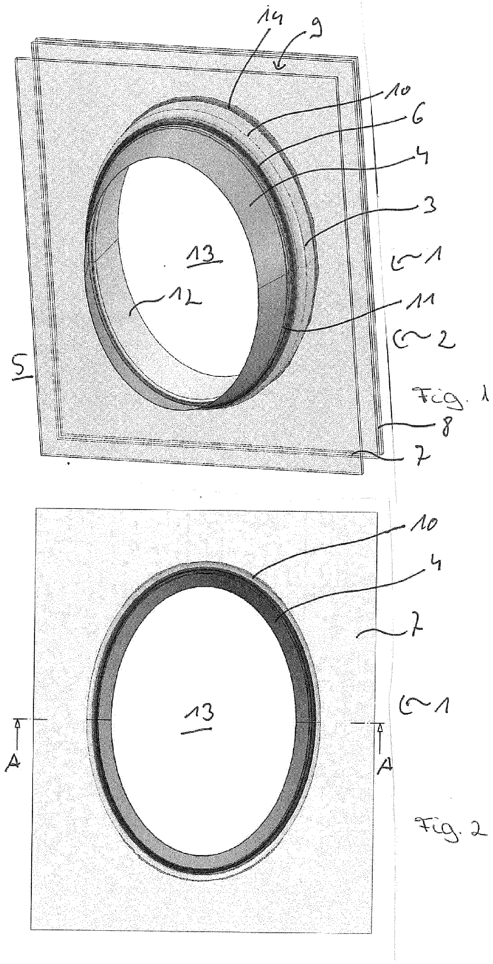

In Fig. 1 ist ein Ausschnitt eines Isolators 1, beispielsweise für pharmazeutische Anwendungen gezeigt. Dieser umfasst eine Doppelwand 2, der ein Handschuhport 3 zugeordnet ist, an welchem hier bereits ein nur ausschnittsweise dargestellter flexibler Handschuh 4 zum Eingreifen in einen von der Doppelwand 2 begrenzten Isolatorraum 5 mit einem eingriffsseitigen Ende 6 festgelegt ist, und zwar in einem Bereich zwischen einer als Einfachglasscheibe ausgebildeten durchsichtigen inneren Wandscheibe 7 und einer als Doppelglasscheibe ausgebildeten äußeren Wandscheibe 8 der Doppelwand 2. Innere Wandscheibe 7 und äußere Wandscheibe 8 begrenzen einen Zwischenraum 9, der als Strömungskanal zur Führung von Gas und/oder Desinfektionsmittel im Umlauf dient, wobei in der Regel Gas durch den Zwischenraum von unten nach oben in einem Umlauferzeugerraum mit Gebläse zurückgeführt und dann durch eine Strömungsberuhigungsstrecke (Laminarflussstrecke) von oben in den Isolatorraum gefördert wird.

Der Handschuhport 3 umfasst einen hier beispielsweise oval konturierten, aus einem durchsichtigen, farblosen Kunststoffmaterial ausgebildeten Kanalring 10, der von der äußeren Wandscheibe 8 in Richtung innerer Wandscheibe 7 und, wie später noch erläutert werden wird, ein Stück weit durch diese bzw. einer darin vorgesehenen Öffnung 11 in den Isolatorraum 5 hineinragt. Der oval konturierte Kanalring 10 begrenzt unmittelbar mit seinem Innenumfang 12 einen Durchgriffskanal 13, durch den hindurch eine Bedienperson von außen in den Handschuh 4 eingreifen und somit die Doppelwand 2 ohne Gefährdung für Produkte oder Bedienperson eingreifen kann. Der Kanalring 10 ist dicht im Bereich eines Öffnungsrandes einer Öffnung 14, die mit der Öffnung 11 fluchtet an der äußeren Wandscheibe 8 festgelegt.

Fig. 2 zeigt eine senkrechte Draufsicht auf die Anordnung gemäß Fig. 1 von innen - dies bedeutet, dass der Handschuh 4 aus der Zeichnungsebene hinausragt.

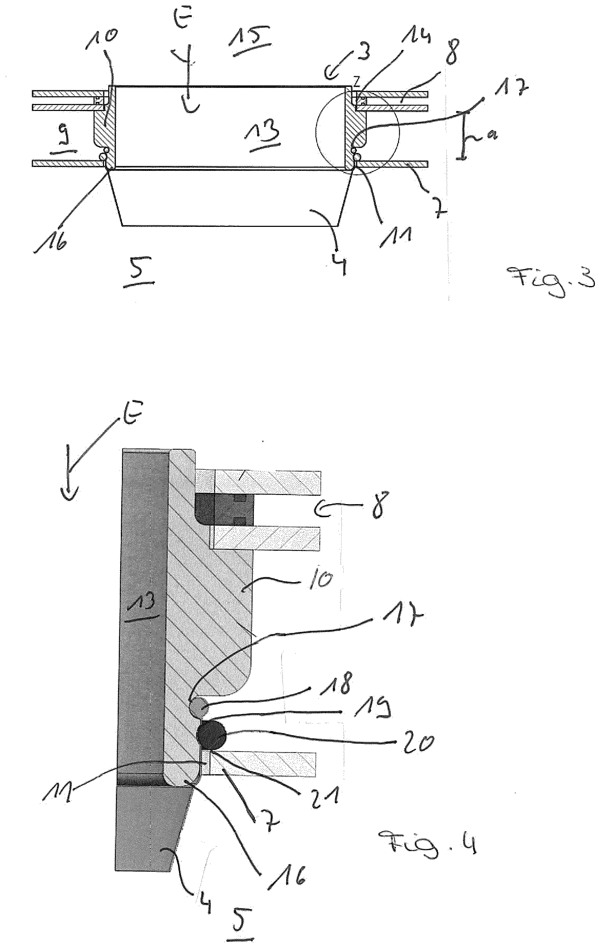

Im Folgenden wird ein bevorzugter Detailaufbau des nach dem Konzept der Erfindung ausgebildeten Isolators gemäß der Fig. 1 und 2 anhand der Fig. 3 und 4 erläutert.

In Fig. 3 ist der Handschuhport 3 im Detail gezeigt. Dieser umfasst den durchsichtigen, beispielsweise aus Polymethylmethacrylat ausgebildeten und an der äußeren Wandscheibe 8 festgelegten Kanalring 10, der in dem gezeigten Ausführungsbeispiel einen Abstand a, von beispielsweise 8 cm zwischen der äußeren Wandscheibe 8 und der inneren Wandscheibe 7 überwindet. Der Kanalring 10 ist dicht innerhalb der Öffnung 14 an der als Doppelscheibe ausgebildeten äußeren Wandscheibe 8 fixiert, so dass kein Gas aus dem zwischen den Wandscheiben 7, 8 gebildeten Zwischenraum 9 in einen Umgebungsbereich 15 außerhalb der äußeren Wandscheibe 8, also auf der vom Isolatorraum 5 abgewandten Seite gelangen kann. Der Kanalring 10 durchsetzt dabei mit seinem freien Ende 16 die Öffnung 11 ein Stück weit in den Isolatorraum 5 hinein.

Zu erkennen ist, dass am Außenumfang des Kanalrings 10 eine Ringnut 17 von der äußeren Wandscheibe 8 in Richtung der inneren Wandscheibe 7 beabstandet vorgesehen ist, innerhalb derer ein endseitiger Handschuhwulst 18 verspannend aufgenommen ist. Hierzu ist der Handschuh 4 von innen her in Richtung äußerer Wandscheibe 8 über das freie Ende 16 des Kanalrings 10 gestülpt.

Zwischen der Ringnut 17 und der inneren Wandscheibe 7 befindet sich eine weitere, als Ringnut ausgebildete Haltenut 19, in der ein als Elastomer-O-Ring ausgebildeter Sicherungsring 20 verspannend aufgenommen ist. Diese Haltenut 19 ist axial entlang einer Eingriffsrichtung E für eine Bedienperson durchsetzt von einem Umfangsabschnitt des Handschuhs 4, so dass dieser Abschnitt des Handschuhs 4 von dem Sicherungsring 20 an den Außenumfang des Kanalrings 10, genauer den Nutgrund der Haltenut 19 gepresst bzw. verspannt wird. Der Sicherungsring 20 befindet sich somit axial entlang der Eingriffsrichtung E zwischen dem hinteren, hier wulstförmigen Ende bzw. dem Handschuhringwulst 18 des Handschuhs 4 und einem Öffnungsrand 21 der Öffnung 11 (Durchgangsöffnung) der inneren Wandscheibe 7, welcher somit einen Anschlag für den Sicherungsring 20 bildet und verhindert, dass dieser in Richtung Isolatorraum 5 abrutschen kann.

Die innere Wandscheibe 7 ist relativ zu der äußeren Wandscheibe 8 verschwenkbar (nicht dargestellt), so dass der an der äußeren Wandscheibe 8 festgelegte Kanalring 10 bzw. dessen freies Ende nach hinten aus der inneren Wandscheibe 7 bzw. der Öffnung 11 heraus verschwenkbar ist, um somit den Sicherungsring 20 entnehmen und den Handschuh 4 abziehen und danach einen neuen Handschuh 4 aufziehen und mit dem Sicherungsring 20 wieder sichern zu können. Zusätzlich zu der relativ verschwenkbaren Anordnung der Wandscheiben 7, 8 zueinander sind die Wandscheiben 7, 8 gemeinsam relativ zu einem weiteren nicht gezeigten Wandabschnitt (Gehäuseabschnitt) des Isolatorraums 5 verschwenkbar angeordnet, um somit die Zugriffsmöglichkeit im Wechsel des Handschuhs 4 zu erleichtern und gleichzeitig in den Isolatorraum 5 über eine größere Öffnung außerhalb des Betriebs eingreifen zu können.

### Bezugszeichen

- 1: Isolator
- 2: Doppelwand
- 3: Handschuhport
- 4: Handschuh
- 5: Isolatorraum
- 6: eingriffseitiges Ende
- 7: innere Wandscheibe
- 8: äußere Wandscheibe
- 9: Zwischenraum
- 10: Kanalring
- 11: Öffnung in der inneren Wandscheibe
- 12: Innenumfang
- 13: Durchgriffskanal
- 14: Öffnung in der äußeren Wandscheibe
- 15: (Außen-)Umgebung
- 16: freies Ende
- 17: Ringnut
- 18: Handschuhringwulst
- 19: Haltenut
- 20: Sicherungsring
- 21: Öffnungsrand

- a: Abstand (allgemein bevorzugt zwischen 5cm und 15cm)

- A-A: Schnittlinie

- E: Eingriffsrichtung
- Z: Detail

## Patentansprüche

1. Isolator (1), insbesondere für pharmazeutische und/oder chemische Anwendungen, mit einem eine Doppelwand (2) aufweisenden Isolatorraum (5), wobei die Doppelwand (2) mindestens eine durchsichtige äußere Wandscheibe (8) und eine dazu beabstandete durchsichtige innere Wandscheibe (7) umfasst, die einen Zwischenraum (9), insbesondere zur Gasführung, begrenzen, und mit mindestens einem der Doppelwand (2) zugeordneten Handschuhport (3), umfassend Mittel zum lösbaren Festlegen eines Handschuhs (4) zum Durchgreifen der Doppelwand (2) zum manuellen Eingreifen in den Isolatorraum (5), wobei der Handschuhport (3) einen, einen Durchgriffskanal (13) umgebenden, bevorzugt durchsichtigen, Kanalring (10) aufweist, der sich ausgehend von der äußeren Wandscheibe (8) in Richtung der inneren Wandscheibe (7) erstreckt, wobei die Mittel zum lösbaren Festlegen des Handschuhs (4) in einem Bereich zwischen der äußeren Wandscheibe (8) und der inneren Wandscheibe (7) außerhalb des Durchgriffskanals (13) angeordnet sind, und wobei die äußere Wandscheibe (8) und die innere Wandscheibe (7) für einen erleichterten Handschuhwechsel relativ zueinander verstellbar, insbesondere verschwenkbar angeordnet sind,
**dadurch gekennzeichnet,**
**dass** die Mittel zum lösbaren Fixieren einen, bevorzugt als Elastomerring ausgebildeten, Sicherungsring (20) zum Umspannen des Handschuhs (4) und bevorzugt des Kanalrings (10) in einem Bereich zwischen der äußeren Wandscheibe (8) und der inneren Wandscheibe (7) umfassen, und dass der Sicherungsring (20) derart relativ zu der inneren Wandscheibe (7) angeordnet ist, dass die, bevorzugt einen Halteanschlag bildende, innere Wandscheibe (7) ein Abrutschen des Sicherungsrings (20) von dem Handschuh (4) in Richtung Innenraum verhindert.

2. Isolator nach Anspruch 1,
**dadurch gekennzeichnet,**
**dass** die Mittel zum lösbaren Festlegen des Handschuhs (4) am Außenumfang des Kanalrings (10), bevorzugt mit Abstand zu der äußeren Wandscheibe (8) in Richtung innerer Wandscheibe (7) versetzt, angeordnet sind.

3. Isolator nach einem der Ansprüche 1 oder 2,
**dadurch gekennzeichnet,**
**dass** die Mittel zum lösbaren Fixieren des Handschuhs (4), insbesondere am Außenumfang des Kanalrings (10), eine, insbesondere nach außen in Richtung Zwischenraum (9) offene, Ringnut (17) zur Aufnahme eines, insbesondere eingriffsendseitigen, Handschuhringwulstes (18) und/oder einen Ringwulst zum Übergreifen mit einem, insbesondere eingriffsendseitigen, Handschuhringwulst (18) und/oder eine Klemmeinrichtung umfassen.

4. Isolator nach Anspruch 3,
**dadurch gekennzeichnet,**
**dass** dem Sicherungsring (20) eine, insbesondere in Richtung Zwischenraum (9) offene, Haltenut (19) für den Sicherungsring (20) und/oder ein Haltewulst zugeordnet sind, wobei Haltenut (19) und/oder Haltewulst bevorzugt in einer Eingriffsrichtung (E) durch den Handschuhport (3) hinter der Ringnut (17) und/oder dem Ringwulst für den Handschuhringwulst (18), weiter bevorzugt vor der inneren Wandscheibe (7) angeordnet sind/ist.

5. Isolator nach einem der vorhergehenden Ansprüche,
**dadurch gekennzeichnet,**
**dass** in der inneren Wandscheibe (7) eine mit dem Durchgriffskanal (13) fluchtende Öffnung (11) angeordnet ist, wobei sich der Kanalring (10) bevorzugt mindestens bis zu dieser Öffnung (11), bevorzugt bis in die Öffnung (11) oder durch die Öffnung (11) hindurch bis in den Isolatorraum (5) erstreckt.

6. Isolator nach einem der vorhergehenden Ansprüche,
**dadurch gekennzeichnet,**
**dass** innerhalb und/oder außerhalb des Kanalrings (10) kein weiterer Kanalring (10) des Handschuhports (3) angeordnet ist.

7. Isolator nach einem der vorhergehenden Ansprüche,
**dadurch gekennzeichnet,**
**dass** die den Handschuhport (3) tragende Doppelwand (2) Bestandteil einer verstellbaren, insbesondere verschwenkbaren Tür ist.

8. Isolatorsystem umfassend einen Isolator (1) nach einem der vorhergehenden Ansprüche, wobei dem Handschuhport (3) ein Handschuh (4) zugeordnet ist, der lösbar an dem Mitteln zum lösbaren Festlegen des Handschuhs (4) außerhalb des Durchgriffskanals (13) in einem Bereich zwischen der äußeren Wandscheibe (8) und der inneren Wandscheibe (7), insbesondere mittels eines offenen Eingriffsendes, fixiert ist, wobei der Handschuh (4), insbesondere spannend, in einem Bereich zwischen der äußeren Wandscheibe (8) und der inneren Wandscheibe (7) umgriffen ist von einem, insbesondere elastomeren und/oder in einer Haltenut (19) aufgenommenem und/oder einen Haltewulst umgreifenden Sicherungsring (20), der gegen ein Abrutschen mittels der inneren Wandscheibe (7) gesichert ist.

9. Isolatorsystem nach Anspruch 8,
**dadurch gekennzeichnet,**
**dass** der Handschuh (4) mit einem, insbesondere eingriffsendseitigen, Handschuhringwulst (18) in einer Ringnut (17), insbesondere am Außenumfang des Kanalsrings (10), bevorzugt gespannt, aufgenommen ist und/oder mit einem, insbesondere eingriffsendseitigen, Handschuhringwulst (18) einen Ringwulst (17), bevorzugt am Außenumfang des Kanalsrings (10), übergreift.

10. Verfahren zum lösbaren Festlegen eines Handschuhs (4) an einem Handschuhport (3) eines Isolators (1) nach einem der Ansprüche 1 bis 7, wobei der Handschuh (4), insbesondere mit einem eingriffsseitigen Ende (6), außerhalb des Durchgriffkanals (13) in einem Bereich zwischen der äußeren (8) und der inneren Wandscheibe (7) am Handschuhport (3), bevorzugt am Außenumfang des Kanalsrings, (10) festgelegt wird,
**dadurch gekennzeichnet,**
**dass** um den Handschuh (4) in einem Bereich zwischen der äußeren (8) und der inneren Wandscheibe (7) ein, bevorzugt elastomerer, Sicherungsring (20), gelegt, bevorzugt verspannt, und daraufhin die äußere Wandscheibe (8) und die innere Wandscheibe (7) zum Sichern des Sicherungsrings (20) gegen Abrutschen aufeinander zu bewegt, bevorzugt verschwenkt, werden.

## Claims

1. Isolator (1), in particular for pharmaceutical and/or chemical applications, having an isolator space (5) comprising a double wall (2), wherein the double wall (2) includes at least one transparent outer wall panel (8) and an inner wall panel (7) located at a distance to the latter and delimiting an interspace (9), in particular for conducting gas, and having at least one glove port (3) assigned to the double wall (2), this glove port comprising means for detachably securing the glove (4) for extending through the double wall (2) for manual intervention in the isolator room (5), wherein the glove port (3) comprises a preferably transparent channel ring (10) enclosing a channel for extension (13) which, starting from the outer wall panel (8) extends in the direction of the inner wall panel (7), wherein the means for detachably securing the glove (4) are arranged in a region between the outer wall panel (8) and the inner wall panel (7) outside the channel for extension (13) and wherein the outer wall panel (8) and the inner wall panel (7) are arranged to be adjustable, in particular pivotable, relative to one another in order to facilitate the changing of gloves, **characterized in that**
the means for detachably securing include a securing ring (20), preferably formed as an elastomer ring, for spanning around the glove (4) and preferably the channel ring (10) in a region between the outer wall panel (8) and the inner wall panel (7), and **in that** the securing ring (20) is arranged relative to the inner wall panel (7) in such a way that the inner wall panel (7), which preferably forms a retaining stop, prevents the securing ring (20) from slipping off the glove (4) in the direction toward the inner space.

2. Isolator according to claim 1,
**characterized in that**
the means for detachably securing the glove (4) on the outer circumference of the channel ring (10) are arranged as to be offset from one another, preferably at a distance to the outer wall panel (8), in the direction of the inner wall panel (7).

3. Isolator according to one of claims 1 or 2,
**characterized in that**
the means for detachably fixing the glove (4), in particular on the outer circumference of the channel ring (10), have an annular groove (17) in particular open to the outside towards the interspace (9) for receiving an annular glove bulge (18) and/or an annular bulge for overlapping with a glove bulge (18), in particular located at the end side of the extension, for manual intervention with glove bulge (18), which is in particular located at the end side of extension, and/or including a clamping device.

4. Isolator according to claim 3,
**characterized in that**
the securing ring (20) has a retaining groove (19) for the securing ring (20) and/or a retaining bulge in particular open toward the interspace (9), wherein the retaining groove (19) and/or the retaining bulge are preferably arranged in a direction of intervention (E) through the glove port (3) behind the annular groove (17) and/or the annular groove for the annular glove bulge (18), further preferably in front of the inner wall panel (7).

5. Isolator according to one of the preceding claims,
**characterized in that**
an opening (11) aligned with the channel for extension (13) is arranged in the inner wall panel (7), wherein the channel ring (10) preferably extends at least as far as to this opening (11), preferably as far as into this opening (11) or through the opening (11) all the way into the isolator space (5).

6. Isolator according to one of the preceding claims,
**characterized in that**
no further channel ring (10) of the glove port (3) is arranged inside and/or outside the channel ring (10).

7. Isolator according to one of the preceding claims,
**characterized in that**
the double wall (2) supporting the glove port (3) forms part of an adjustable, in particular pivotable door.

8. Isolator system including an isolator (1) according to one of the preceding claims, wherein the glove port (3) is assigned a glove (4), which is fixed in a detachable manner to the means for detachably fixing the glove (4) outside the channel for extension (13) in a region between the outer wall panel (8) and the inner wall panel (7), in particular by means of an open end for extension, wherein the glove (4), in particular in a clamping manner, is engaged around by a securing ring (20), in particular an elastomeric securing ring and/or a securing ring received in a retaining groove (19) and/or engaging around a retaining bulge, in a region between the outer wall panel (8) and the inner wall panel (7), the ring secured against a slip-off of by means of the inner wall panel (7).

9. Insulator system according to claim 8,
**characterized in that**
the glove (4) is received in an annular groove (17), in particular on the outer circumference of the channel ring (10), with an annular glove bulge (18), in particular intervention end-sided, preferably in a clamped manner, and/or engages over an annular bulge (17) with an annular glove bulge (18), in particular intervention end-sided, preferably on the outer circumference of the channel ring (10).

10. Method for detachably securing a glove (4) to a glove port (3) of an isolator (1) according to one of claims 1 to 7, wherein the glove (4), in particular with an end (6) on the extension side, is secured to the glove port (3) outside the channel for extension (13) in the region between the outer (8) and the inner wall panel (7), preferably secured to the outer circumference of the channel ring (10),
**characterized in that**
a securing ring (20), preferably an elastomeric securing ring, is placed preferably clamped, around the glove (4) in a region between the outer (8) and the inner wall panel (7), and then the outer wall panel (8) and the inner wall panel (7) are moved, in particular pivoted, towards each other to secure the securing ring (20) against a slip-off.

## Revendications

1. Isolateur (1), en particulier pour applications pharmaceutiques et/ou chimiques, comprenant un espace d'isolateur (5) présentant une double paroi (2), la double paroi (2) comprenant au moins une vitre de paroi extérieure transparente (8) et une vitre de paroi intérieure transparente (7) espacée de celle-ci, qui délimitent un espace intermédiaire (9), en particulier pour le passage de gaz, et comprenant au moins un orifice pour gant (3) associé à la double paroi (2), comprenant des moyens pour fixer de manière amovible un gant (4) destiné à s'engager à travers la double paroi (2) pour intervenir manuellement dans l'espace d'isolateur (5), l'orifice pour gant (3) présentant un anneau de canal (10) de préférence transparent entourant un canal d'engagement (13), qui s'étend à partir de la vitre de paroi extérieure (8) dans la direction de la vitre de paroi intérieure (7), les moyens pour la fixation amovible du gant (4) étant disposés dans une région entre la vitre de paroi extérieure (8) et la vitre de paroi intérieure (7) à l'extérieur du canal d'engagement (13), et la vitre de paroi extérieure (8) et la vitre de paroi intérieure (7) étant disposées de manière déplaçable l'une par rapport à l'autre, en particulier de manière pivotante, pour faciliter un changement de gant,
**caractérisé en ce que**
des moyens pour la fixation amovible comprennent une bague de fixation (20) réalisée de préférence sous forme de bague en élastomère pour enserrer le gant (4) et de préférence l'anneau de canal (10) dans une région entre la vitre de paroi extérieure (8) et la vitre de paroi intérieure (7), et **en ce que** la bague de fixation (20) est disposée par rapport à la vitre de paroi intérieure (7) de telle sorte que la vitre de paroi intérieure (7), formant de préférence une butée de retenue, empêche un glissement de la bague de fixation (20) depuis le gant (4) dans la direction de l'espace intérieur.

2. Isolateur selon la revendication 1,
**caractérisé en ce que**
les moyens pour la fixation amovible du gant (4) sont disposés au niveau de la périphérie extérieure de l'anneau de canal (10), de préférence à distance de la vitre de paroi extérieure (8) de manière décalée dans la direction de la vitre de paroi intérieure (7).

3. Isolateur selon l'une quelconque des revendications 1 ou 2,
**caractérisé en ce que**
les moyens pour la fixation amovible du gant (4), en particulier au niveau de la périphérie extérieure de l'anneau de canal (10), comprennent une rainure annulaire (17) ouverte notamment vers l'extérieur dans la direction de l'espace intermédiaire (9) pour recevoir un bourrelet annulaire de gant (18), en particulier, du côté de l'extrémité d'engagement, et/ou un bourrelet annulaire pour venir en prise par le dessus avec un bourrelet annulaire de gant (18), en particulier du côté de l'extrémité d'engagement, et/ou un dispositif de serrage.

4. Isolateur selon la revendication 3,
**caractérisé en ce**
**qu'**une rainure de retenue (19), en particulier ouverte dans la direction de l'espace intermédiaire (9), pour la bague de fixation (20), et/ou un bourrelet de retenue sont associés à la bague de fixation (20), la rainure de retenue (19) et/ou le bourrelet de retenue étant disposés de préférence dans une direction d'engagement (E) à travers l'orifice de gant (3) derrière la rainure annulaire (17) et/ou le bourrelet annulaire pour le bourrelet annulaire de gant (18), plus préférablement avant la vitre de paroi intérieure (7).

5. Isolateur selon l'une quelconque des revendications précédentes,
**caractérisé en ce que**
dans la vitre de paroi intérieure (7) est disposée une ouverture (11) alignée avec le canal d'engagement (13), l'anneau de canal (10) s'étendant de préférence au moins jusqu'à cette ouverture (11), de préférence jusque dans l'ouverture (11) ou à travers l'ouverture (11) jusque dans l'espace d'isolateur (5).

6. Isolateur selon l'une quelconque des revendications précédentes,
**caractérisé en ce**
**qu'**à l'intérieur et/ou à l'extérieur de l'anneau de canal (10) n'est disposé aucun autre anneau de canal (10) de l'orifice de gant (3).

7. Isolateur selon l'une quelconque des revendications précédentes,
**caractérisé en ce que**
la double paroi (2) portant l'orifice de gant (3) fait partie d'une porte mobile, en particulier pivotante.

8. Système isolateur comprenant un isolateur (1) selon l'une quelconque des revendications précédentes, un gant (4) étant associé à l'orifice de gant (3), lequel est fixé de manière amovible aux moyens de fixation amovible du gant (4) à l'extérieur du canal d'engagement (13) dans une région entre la vitre de paroi extérieure (8) et la vitre de paroi intérieure (7), en particulier au moyen d'une extrémité d'engagement ouverte, le gant (4) étant saisi sur son pourtour, en particulier par serrage, dans une région entre la vitre de paroi extérieure (8) et la vitre de paroi intérieure (7) et par une bague de fixation (20), en particulier en élastomère et/ou reçue dans une rainure de retenue (19) et/ou s'engageant autour d'un bourrelet de retenue, qui est fixée contre tout glissement au moyen de la vitre de paroi intérieure (7).

9. Système isolateur selon la revendication 8,
**caractérisé en ce que**
le gant (4) est reçu, de préférence serré, par un bourrelet annulaire de gant (18) en particulier du côté de l'extrémité d'engagement, dans une rainure annulaire (17), en particulier à la périphérie extérieure de l'anneau de canal (10), et/ou vient en prise par le dessus, par un bourrelet annulaire de gant (18) notamment du côté de l'extrémité d'engagement, avec un bourrelet annulaire (17), de préférence à la périphérie extérieure de l'anneau de canal (10).

10. Procédé pour la fixation amovible d'un gant (4) à un orifice de gant (3) d'un isolateur (1) selon l'une quelconque des revendications 1 à 7, dans lequel le gant (4), en particulier par une extrémité du côté d'engagement (6), est fixé à l'extérieur du canal d'engagement (13) dans une région entre la vitre de paroi extérieure (8) et la vitre de paroi intérieure (7) au niveau de l'orifice de gant (3), de préférence au niveau de la périphérie extérieure de l'anneau de canal (10), **caractérisé en ce que**
qu'une bague de fixation (20), de préférence en élastomère, est posée, de préférence serrée, autour du gant (4) dans une région entre la vitre de paroi extérieure (8) et la vitre de paroi intérieure (7) puis la vitre de paroi extérieure (8) et la vitre de paroi intérieure (7) sont déplacées l'une vers l'autre, de préférence pivotées pour fixer la bague de fixation (20) pour l'empêcher de glisser.
